# EUROPEAN PATENT APPLICATION

(11) **EP 3 214 348 A1**
(43) Date of publication of application: **06.09.2017**
(21) Application number: 15855635.7
(22) Date of filing: 31.03.2015
(51) Int. Cl.: F16H 61/34, F16H 63/30

(54) **APPARATUS FOR CONTROLLING MOTIVE POWER TRANSMISSION IN VEHICLE**

(30) Priority: 28.10.2014 JP 2014219118
(71) Applicant: Aisin AI Co., Ltd., Nishio-shi, Aichi 445-0006 (JP)
(72) Inventor: MASUI, Yuuki, Nishio-shi Aichi 445-0006 (JP)
(74) Representative: TBK
(86) International application number: PCT/JP2015/060047
(87) International publication number: WO 2016/067656

(57) **Abstract**

Provided is a power transmission control apparatus for a vehicular which controls shift operation of a transmission among gear stages through use of actuators and which can shorten the neutral period in the shift operation and can perform skip shift. A plurality of fork shafts coupled with "sleeves engageable with free-rotating gears" include first and second fork shafts. When both the first and second fork shafts are located in their neutral positions, the first and second fork shafts are not coupled in the axial direction so that, while one fork shaft is maintained in its neutral position, the other fork shaft can be moved by an actuator from its neutral position to its meshing position. When the one fork shaft is located in its neutral position and the other fork shaft is located in its meshing position, the first and second fork shafts are coupled in the axial direction so that, when the one fork shaft is moved from its neutral position to its meshing position by the actuator, the other fork shaft is simultaneously moved from its meshing position to its neutral position.

## Description

### TECHNICAL FIELD

The present invention relates to an apparatus for controlling motive power transmission in a vehicle (hereinafter referred to as a "power transmission control apparatus for a vehicle").

### BACKGROUND ART

Conventionally, there has been a power transmission control apparatus for a vehicle which includes a transmission having a plurality of gear stages and controls shifting among the gear stages of the transmission through use of actuators (see, for example, Patent Document 1).

In the transmission of such an apparatus, a plurality of fork shafts are provided. Each fork shaft is movable in the axial direction between its neutral position and a meshing position, independently of the remaining fork shafts. In a state in which one fork shaft is located in its meshing position and all the remaining fork shafts are located in their neutral positions, a sleeve coupled with the one fork shaft comes into engagement with a free-rotating gear for a gear stage corresponding to the meshing position. As a result, the free-rotating gear is unrotatably fixed to a shaft on which the free-rotating gear is provided, whereby the gear stage corresponding to the meshing position is realized. The position of each fork shaft in the axial direction is controlled by an actuator.

In this transmission, when a gear shift from the current gear stage to an adjacent gear stage (so-called "sequential shift") is performed, first, a fork shaft corresponding to the current gear stage is moved by the actuator to its neutral position from its meshing position for that gear stage. Namely, there is attained a state in which all the fork shafts are located in their neutral positions. Thus, the state of the transmission changes from a "state in which the current gear stage has been realized" to neutral (a state in which no gear stage is realized). Subsequently, a fork shaft corresponding to the adjacent gear stage is moved by the actuator from its neutral position to its meshing position for that gear stage. As a result, the state of the transmission changes from neutral to a "state in which the adjacent gear stage has been realized." As described above, in the case of sequential shift, a gear stage to be used after the shift operation (hereinafter simply referred to as the "gear stage after the shift operation") is "realized" after the "cancellation" of the gear stage used before the shift operation (hereinafter simply referred to as the "gear stage before the shift operation").

In addition, in this transmission, a gear shift (so-called "skip shift") from the current gear stage to a gear stage (hereinafter, referred to as a "nonadjacent gear stage") which is two or more gear stages apart from the current gear stage can be performed. In the skip shift, after the state of the transmission has changed to neutral from the "state in which the current gear stage has been realized," a fork shaft corresponding to the nonadjacent gear stage is moved from its neutral position to its meshing position for that nonadjacent gear stage.

### PRIOR ART DOCUMENT

### PATENT DOCUMENT

Patent Document 1: Japanese Patent Application Laid-Open (*kokai*) No. 2006-97740

### SUMMARY OF THE INVENTION

In the case of a power transmission control apparatus including the above-described transmission, a vehicle cannot be accelerated over a neutral period in the shift operation between the "operation of cancelling the gear stage before the shift operation" and the "operation of realizing the gear stage after the shift operation." Accordingly, there has been demand for shortening the neutral period to the extent possible.

The present invention has been accomplished in view of the above-described point, and its object is to provide a power transmission control apparatus for a vehicle which controls shift operation of a transmission among gear stages through use of actuators and which can shorten the neutral period in the shift operation and can perform skip shift.

The feature of the power transmission control apparatus for a vehicle according to the present invention resides in provision of a coupling mechanism which can couple first and second fork shafts among a plurality of fork shafts in the axial direction. The coupling mechanism is configured such that when both the first and second fork shafts are located in their neutral positions, the coupling mechanism does not couple the first and second fork shafts in the axial direction so that, while one of the first and second fork shafts is maintained in its neutral position, the other of the first and second fork shafts can be moved, through drive of the actuator, from its neutral position to the corresponding meshing position. Further, the coupling mechanism is configured such that when the one fork shaft is located in its neutral position and the other fork shaft is located in the corresponding meshing position, the coupling mechanism couples the first and second fork shafts in the axial direction so that, when the one fork shaft is moved from its neutral position to the corresponding meshing position through drive of the actuator, the other fork shaft is simultaneously moved from the corresponding meshing position to its neutral position.

Accordingly, in the case where a gear shift from "a gear stage corresponding to the meshing position of the other fork shaft" to "a gear stage corresponding to the meshing position of the one fork shaft" is performed, the operation of cancelling the gear stage before the shift operation and the operation of realizing the gear stage after the shift operation are performed simultaneously. Accordingly, the neutral period becomes shorter as compared with the case of a conventional apparatus in which the "operation of realizing the gear stage after the shift operation" is performed after the "operation of cancelling the gear stage before the shift operation."

In addition, the above-described apparatus according to the present invention can move each fork shaft between its neutral position and a corresponding meshing position while maintaining all the remaining fork shafts in their neutral positions. Accordingly, after the fork shaft corresponding to the currently realized gear stage has moved to its neutral position from the meshing position corresponding to that gear stage, any fork shaft can be moved from its neutral position to a meshing position. Namely, by performing the "operation of realizing the gear stage after the shift operation" after the "operation of cancelling the gear stage before the shift operation" as in the case of the conventional apparatus, the "skip shift" can be performed as in the case of the conventional apparatus. In summary, the present apparatus can shorten the neutral period in the shift operation and can perform the skip shift.

In the above-described apparatus according to the present invention, each of the fork shafts may have two heads which are separated from each other in the axial direction and which correspond to two of a plurality of the gear stages, and the transmission may include a shift and selection shaft which is provided to be movable in the axial direction and rotatable about its axis and which has an inner lever protruding from a circumferential surface of the shift and selection shaft. This shift and selection shaft is driven by the above-mentioned actuator.

In this case, a distance obtained by subtracting, from a distance between the two heads provided on the fork shaft, a moving distance of the fork shaft from the neutral position to the meshing position, is preferably greater than a width of the inner lever as measured in the axial direction of the fork shaft.

By virtue of the above-described configuration, in the case where the gear shift from "the gear stage corresponding to the meshing position of the other fork shaft" to "the gear stage corresponding to the meshing position of the one fork shaft" is performed, it is possible to move the inner lever from a position between the two heads provided on the other fork shaft to a position between the two heads provided on the one fork shaft while maintaining the other fork shaft in the meshing position (namely, without performing the "operation of cancelling the gear stage before the shift operation"). Thereafter, by pressing either one of the two heads of the one fork shaft in the axial direction by the inner lever, the one fork shaft is moved from its neutral position to its meshing position, whereby the "operation of cancelling the gear stage before the shift operation" and the "operation of realizing the gear stage after the shift operation" are performed simultaneously as described above.

### BRIEF DESCRIPTION OF THE DRAWINGS

FIG. 1 is a schematic diagram of a vehicular power transmission control apparatus according to an embodiment of the present invention.
FIG. 2 is a schematic view showing the positional relation between an S&S shaft and a plurality of fork shafts in neutral in the transmission shown in FIG. 1.
FIG. 3 is a pair of schematic views showing the state of engagement between a "sleeve and a fork shaft" and the S&S shaft in the transmission shown in FIG. 1.
FIG. 4 is a set of schematic views showing the states of the plurality of fork shaft in a state in which each gear stage is realized in the transmission shown in FIG. 1.
FIG. 5 is a pair of views used for describing the relation between the distance between a pair of heads and the width of an inner lever.
FIG. 6 is a set of views used for describing an operation for a sequential shift from a second gear stage to a third gear stage in the transmission shown in FIG. 1.
FIG. 7 is a set of views used for describing an operation for a sequential shift from the second gear stage to a first gear stage in the transmission shown in FIG. 1.
FIG. 8 is a set of views used for describing an operation for a skip shift from the third gear stage to the first gear stage in the transmission shown in FIG. 1.
FIG. 9 is a set of views corresponding to those of FIG. 4 and relating to a transmission according to a modification of the transmission shown in FIG. 1.
FIG. 10 is a first set of views corresponding to those of FIG. 4 and relating to a transmission according to a second modification of the transmission shown in FIG. 1.
FIG. 11 is a second set of views corresponding to those of FIG. 4 and relating to a transmission according to the second modification of the transmission shown in FIG. 1.
FIG. 12 is a view corresponding to FIG. 2 and relating to a transmission according to a third modification of the transmission shown in FIG. 1.
FIG. 13 is a set of views corresponding to those of FIG. 4 and relating to the transmission shown in FIG. 12.
FIG. 14 is a set of views corresponding to those of FIG. 6 and relating to the transmission shown in FIG. 12.
FIG. 15 is a set of views corresponding to those of FIG. 7 and relating to the transmission shown in FIG. 12.
FIG. 16 is a set of views corresponding to those of FIG. 8 and relating to the transmission shown in FIG. 12.
FIG. 17 is a set of views corresponding to those of FIG. 13 and relating to a transmission according to a modification of the transmission shown in FIG. 12.

### MODE FOR CARRYING OUT THE INVENTION

### (Overall Configuration)

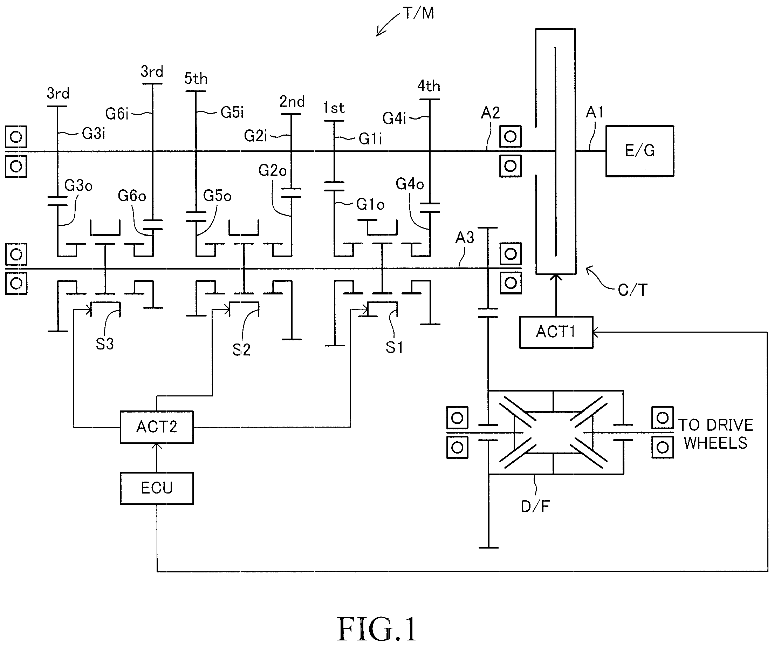

A vehicular power transmission control apparatus according to an embodiment of the present invention (hereinafter referred to as the "present apparatus") will now be described with reference to the drawings. As shown in FIG. 1, the present apparatus includes a transmission T/M, a friction clutch C/T, a clutch actuator ACT1, a shift actuator ACT2, and an electronic control unit (ECU). The present apparatus is also called an automated manual transmission (AMT).

The transmission T/M is a transmission which does not include a torque converter (a so-called manual transmission). The transmission T/M has an input shaft A2 to which power is input from a drive output shaft A1 of an engine E/G which is a well-known internal combustion engine, and an output shaft A3 from which power is output to drive wheels of the vehicle. The drive output shaft A1 and the input shaft A2 are disposed coaxially with each other, and the input shaft A2 and the output shaft A3 are disposed in parallel with each another. The input shaft A2 and the output shaft A3 are supported by a housing (not shown) of the transmission T/M such that they cannot move in the axial direction and can rotate about their axes. The transmission T/M has six gear stages (a first gear stage (1st) to a sixth gear stage (6th)) for advancing the vehicle. The state of the transmission T/M is controlled by the shift actuator ACT2. The details of the structure of the transmission T/M will be described later.

The friction clutch C/T is a well known flat plate clutch disposed between the drive output shaft A1 of the engine E/G and the input shaft A2 of the transmission T/M. The friction clutch C/T is configured such that it can selectively realize an "engaged state" in which a power transmission system is formed between the drive output shaft A1 and the input shaft A2 and a "disengaged state" in which the power transmission system is not formed. The state of the friction clutch C/T is controlled by the clutch actuator ACT1. Therefore, the friction clutch C/T does not have a clutch pedal operated by a driver.

The ECU controls the clutch actuator ACT1 (accordingly, the state of the friction clutch C/T) and the shift actuator ACT2 (accordingly, the state of the transmission T/M) on the basis of information from various sensors, such as a sensor for detecting the amount of operation of an accelerator pedal (accelerator opening) of the vehicle, a sensor for detecting the position of a shift lever of the vehicle, and a sensor for detecting the speed of the vehicle, all of which are not shown.

### (Structure of the transmission T/M)

The structure of the transmission T/M will be described specifically with reference to FIGS. 1 to 8. As shown in FIG. 1, the transmission T/M includes a plurality of fixed gears (also referred to as "drive gears") G1 i, G2i, G3i, G4i, G5i, and G6i; and a plurality of free-rotating gears (also referred to "driven gears") G1o, G2o, G3o, G4o, G5o, and G6o. The fixed gears G1 i, G2i, G3i, G4i, G5i, and G6i correspond to the first, second, third, fourth, fifth, and sixth gear stages for forward movement, and are unrotatably fixed to the input shaft A2 to be coaxially with the input shaft A2 and be unmovable in the axial direction in relation to the input shaft A2.

The free-rotating gears G1o, G2o, G3o, G4o, G5o, and G6o correspond to the first, second, third, fourth, fifth, and sixth gear stages for forward movement, and are rotatably provided on the output shaft A3 to be coaxial with the output shaft A3 and be unmovable in the axial direction in relation to the output shaft A3. The free-rotating gears G1o, G2o, G3o, G4o, G5o, and G6o are always in meshing engagement with the fixed gears G1 i, G2i, G3i, G4i, G5i, and G6i, respectively.

The transmission T/M includes sleeves S1, S2, and S3. The sleeves S1, S2, and S3 are unrotatably provided on the output shaft A3 to be coaxial with the output shaft A3 and be movable in the axial direction in relation to the output shaft A3. The sleeve S1 is engageable with the free-rotating gears G1o and G4o for the first and fourth gear stages. The sleeve S2 is engageable with the free-rotating gears G5o and G2o for the fifth and second gear stages. The sleeve S3 is engageable with the free-rotating gears G3o and G6o for the third and sixth gear stages.

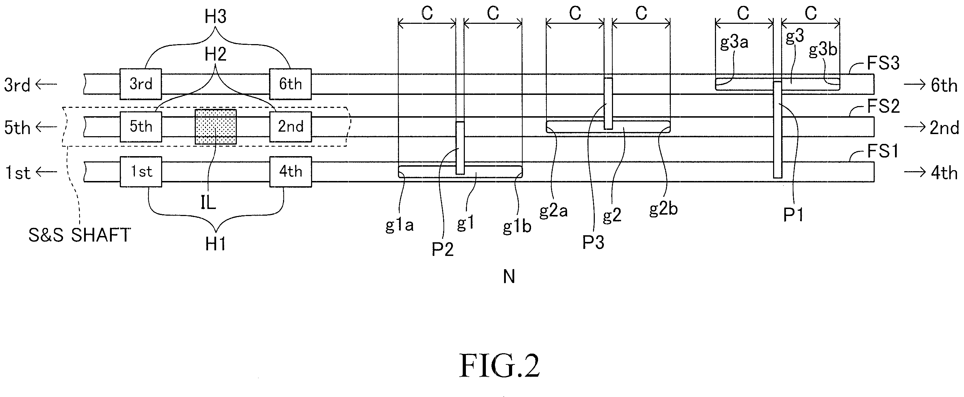

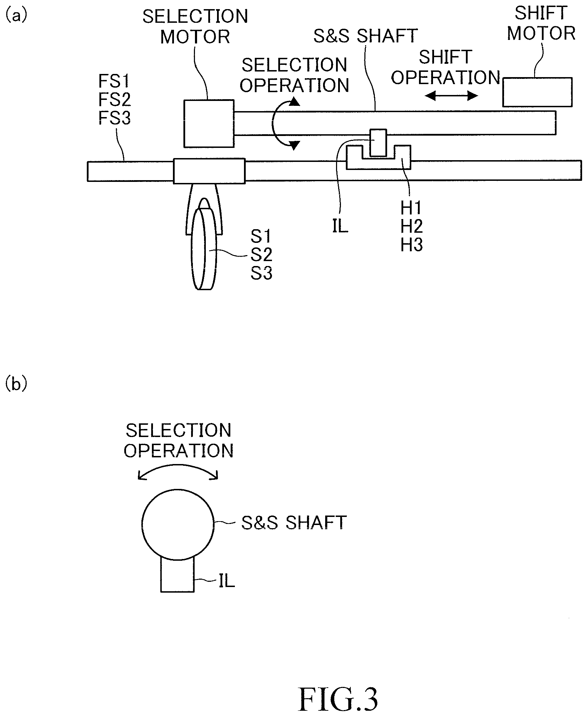

As shown in FIGS. 2 and 3, the transmission T/M includes fork shafts FS1, FS2, and FS3. The fork shafts FS1, FS2, and FS3 are supported by the housing (not shown) of the transmission T/M such that they can move in the axial direction, they cannot rotate about their axes, and are parallel to one another. As shown in FIG. 3, the fork shafts FS1, FS2, and FS3 are coupled with the sleeves S1, S2, and S3, respectively, such that each of them cannot move in the axial direction in relation to the corresponding sleeve.

When all the fork shafts FS1, FS2, and FS3 are located in their neutral positions in the axial direction (positions shown in FIG. 2), none of the sleeves S1, S2, and S3 are in engagement with the corresponding free-rotating gears. As a result, a neutral state (a state in which a power transmission system is not formed between the input shaft A2 and the output shaft A3) is realized.

When the fork shaft FS1 moves from the neutral position (the position shown in FIG. 2) to the meshing position for the first gear stage (the fourth gear stage) (leftward (rightward) in FIG. 2), the sleeve S1 comes into engagement with the free-rotating gear G1o (G4o), so that the free-rotating gear G1o (G4o) is fixed to the output shaft A3 so as to be unrotatable relative to the output shaft A3. As a result, the first gear stage (the fourth gear stage) is realized. A state in which a gear stage is "realized" means a "state in which only the free-rotating gear for that gear stage is unrotatablly fixed to the output shaft A3 and the free-rotating gears for all the remaining gear stages are maintained rotatable in relation to the output shaft A3." In other words, the state in which a gear stage is "realized" refers to a "state in which a power transmission system having a reduction ratio (the ratio of the rotational speed of the input shaft A2 to the rotational speed of the output shaft A3) of that gear stage is formed between the input shaft A2 and the output shaft A3."

Similarly, when the fork shaft FS2 moves from the neutral position (the position shown in FIG. 2) to the meshing position for the fifth gear stage (the second gear stage) (leftward (rightward) in FIG. 2), the sleeve S2 comes into engagement with the free-rotating gear G5o (G2o), whereby the fifth gear stage (the second gear stage) is realized. When the fork shaft FS3 moves from the neutral position (the position shown in FIG. 2) to the meshing position for the third gear stage (the sixth gear stage) (leftward (rightward) in FIG. 2), the sleeve S3 comes into engagement with the free-rotating gear G3o (G6o), whereby the third gear stage (the sixth gear stage) is realized.

A head H1 is fixed to the fork shaft FS1 and has a head portion for the first gear stage (hereinafter referred as the "1 st head") and a head portion for the fourth gear stage (hereinafter referred as the "4th head") which are spaced from each other in the axial direction. A head H2 is fixed to the fork shaft FS2 and has a head portion for the fifth gear stage (hereinafter referred as the "5th head") and a head portion for the second gear stage (hereinafter referred as the "2nd head") which are spaced from each other in the axial direction. A head H3 is fixed to the fork shaft FS3 and has a head portion for the third gear stage (hereinafter referred as the "3rd head") and a head portion for the sixth gear stage (hereinafter referred as the "6th head") which are spaced from each other in the axial direction. The heads for the respective gear stages project radially from the circumferential surfaces of the corresponding fork shafts.

As shown in FIGS. 2 and 3, the transmission T/M has a shift and selection shaft (hereinafter referred to as the "S&S shaft"). The S&S shaft is supported by the housing (not shown) of the transmission T/M such that it is relatively movable in the axial direction and be rotatable about its axis. An inner lever IL radially projects from the circumferential surface of the S&S shaft.

As a result of rotation of the S&S shaft about its axis, one of the fork shafts FS1, FS2, and FS3 is selected, and the inner lever IL enters the space between the two heads provided on the selected fork shaft (see FIGS. 2 and 3). When the S&S shaft is moved in the axial direction in this state, the inner lever IL presses either one of the two heads of the selected fork shaft in the axial direction. As a result, the selected fork shaft moves in the axial direction from the neutral position to the meshing position for the gear stage corresponding to the pressed head. As a result, the gear stage corresponding to the pressed head is realized.

Specifically, the shift actuator ACT2 (see FIG. 1) includes a shift motor and a selection motor (see FIG. 3). The selection motor rotates the S&S shaft about its axis (selection operation). The shift motor drives the S&S shaft in the axial direction (shift operation). Accordingly, the neutral and the first through sixth gear stages can be selectively realized by controlling the selection motor and the shift motor (namely, performing the selection operation and the shift operation).

As shown in FIG. 2, the fork shafts FS1, FS2, and FS3 have respective grooves g1, g2, and g3 which are formed on their circumferential surfaces and extend in the axial direction. In addition, pins P1, P2, and P3 are fixed to the fork shafts FS1, FS2, and FS3, respectively, such that they protrude radially outward from their circumferential surfaces. The distal ends of the pins P1, P2, and P3 are fitted into the grooves g3, g1, and g2, respectively. Each of the combination of "the pin P1 and the groove g3," the combination of "the pin P2 and the groove g1," and the combination of "the pin P3 and the groove g2," constitutes the above-mentioned "coupling mechanism."

When both the fork shafts FS1 and FS3 are located in their neutral positions, the distal end of the pin P1 is located in the center of the groove g3 in the axial direction (see FIG. 2). In this state, the distances in the axial direction between the pin P1 and the ends g3a and g3b of the groove g3 in the axial direction are each equal to a moving distance in the axial direction of each fork shaft from its neutral position to the meshing position for the corresponding gear stage (hereinafter, the moving distance will be referred to as the "FS moving distance C"). Accordingly, when one of the fork shafts FS1 and FS3 is located in the neutral position and the other of the fork shafts FS1 and FS3 is located in the meshing position for a certain gear stage, the distal end of the pin P1 butts against either one of the ends g3a and g3b. In other words, the fork shafts FS1 and FS3 are coupled with each other in the axial direction.

When both the fork shafts FS1 and FS2 are located in their neutral positions, the distal end of the pin P2 is located in the center of the groove g1 in the axial direction (see FIG. 2). In this state, the distances in the axial direction between the pin P2 and the ends g1a and g1b of the groove g1 in the axial direction are each equal to the FS moving distance C. Accordingly, when one of the fork shafts FS1 and FS2 is located in the neutral position and the other of the fork shafts FS1 and FS2 is located in the meshing position for a certain gear stage, the distal end of the pin P2 butts against either one of the ends g1 a and g1 b. In other words, the fork shafts FS1 and FS2 are coupled with each other in the axial direction.

When both the fork shafts FS2 and FS3 are located in their neutral positions, the distal end of the pin P3 is located in the center of the groove g2 in the axial direction (see FIG. 2). In this state, the distances in the axial direction between the pin P3 and the ends g2a and g2b of the groove g2 in the axial direction are each equal to the FS moving distance C. Accordingly, when one of the fork shafts FS2 and FS3 is located in the neutral position and the other of the fork shafts FS2 and FS3 is located in the meshing position for a certain gear stage, the distal end of the pin P3 butts against either one of the ends g2a and g2b. In other words, the fork shafts FS2 and FS3 are coupled with each other in the axial direction.

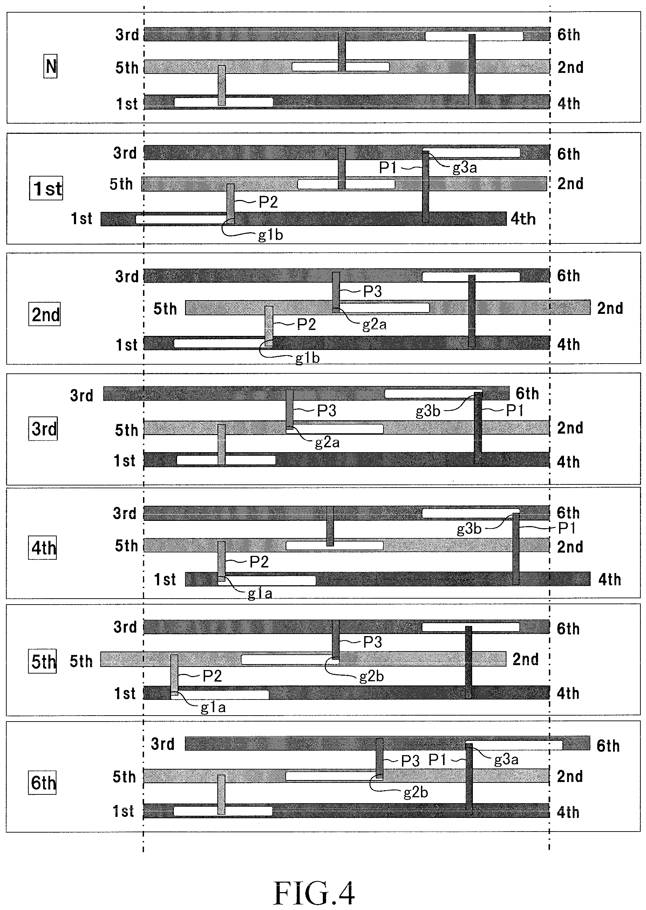

Specifically, as shown in FIG. 4, in a state in which the first gear stage has been realized, the pin P1 butts against the end g3a, and the pin P2 butts against the end g1b. In a state in which the second gear stage has been realized, the pin P2 butts against the end g1 b, and the pin P3 butts against the end g2a. In a state in which the third gear stage has been realized, the pin P3 butts against the end g2a, and the pin P1 butts against the end g3b. In a state in which the fourth gear stage has been realized, the pin P1 butts against the end g3b, and the pin P2 butts against the end g1a. In a state in which the fifth gear stage has been realized, the pin P2 butts against the end g1 a, and the pin P3 butts against the end g2b. In a state in which the sixth gear stage has been realized, the pin P3 butts against the end g2b, and the pin P1 butts against the end g3a.

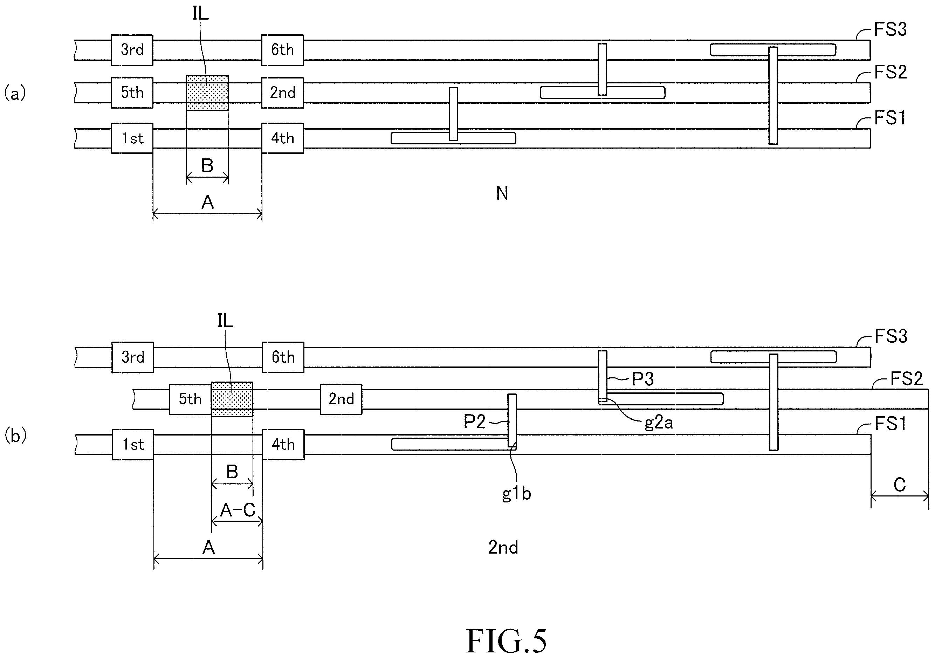

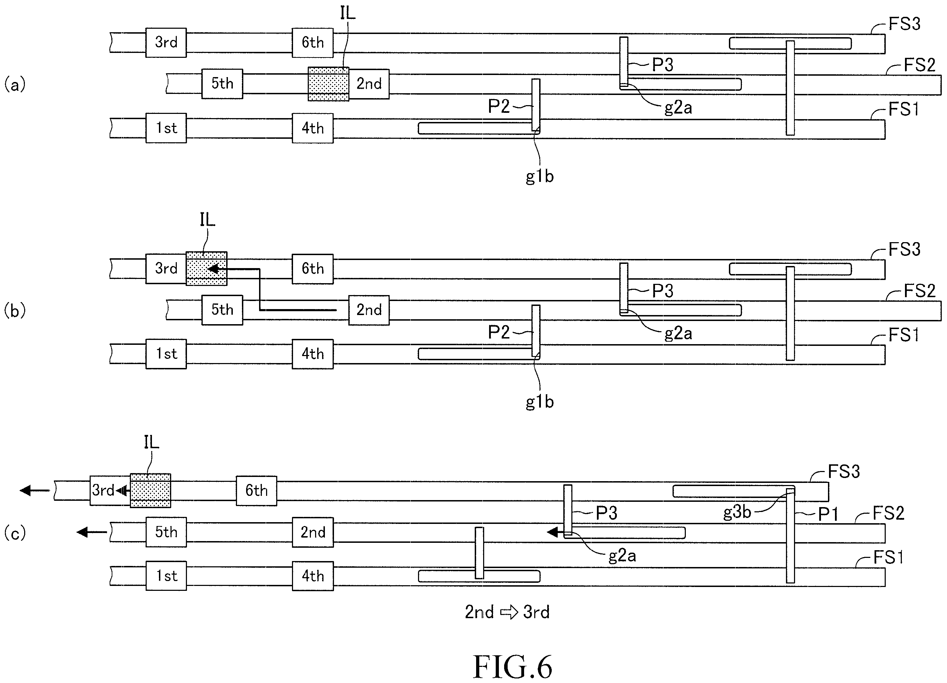

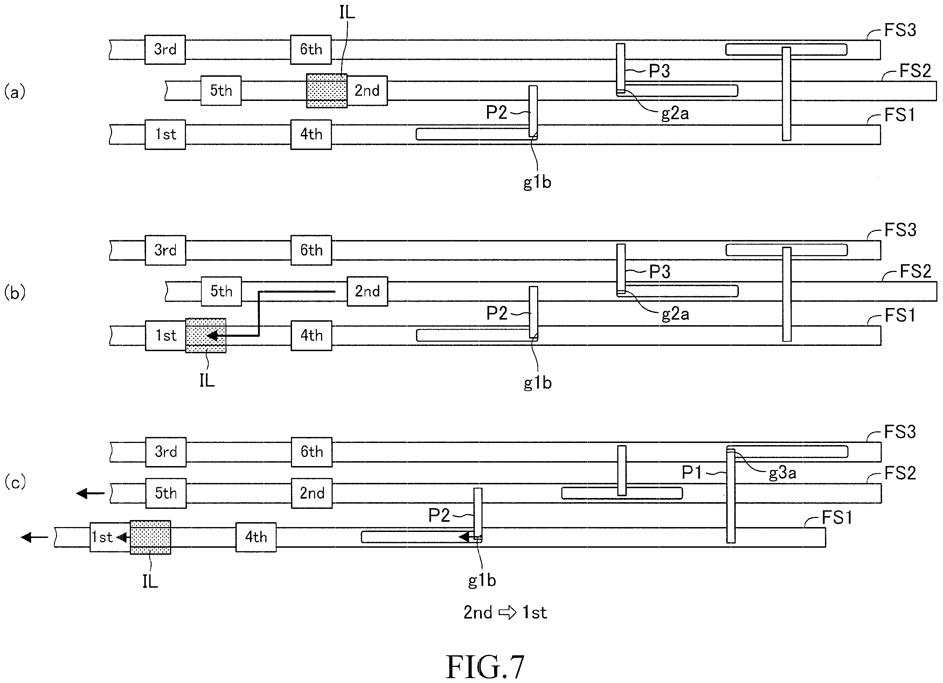

When the axial distance between the two heads provided on each fork shaft is denoted by "A" and the width of the inner lever IL in the axial direction is denoted by "B" as shown in FIG. 5(a), a relation of (A-C) > B holds as can be understood from FIG. 5(b). Since this relation holds, in the present apparatus, for the sequential shift (shift from the current gear stage to an adjacent gear stage), the "operation of cancelling the current gear stage" and the "operation of realizing the adjacent gear stage" can be performed simultaneously. This point will now be described with reference to FIGS. 6 and 7.

FIG. 6 shows an operation for the sequential upshift from the second gear stage to the third gear stage. As shown in FIG. 6(a), in a state in which the second gear stage has been realized, the inner lever IL butts against the 2nd head. In this state, since the relation of "(A-C) > B" holds as described above, the inner lever IL can move in the space between the 5th head and the 6th head upon the selection operation. As a result, as indicated by a thin arrow in FIG. 6(b), by combining the shift operation and the selection operation, it is possible to move the inner lever IL from a "position for butting against the 2nd head" to a "position for butting against the 3rd head" while maintaining the fork shaft FS2 in the meshing position for the second gear stage (namely, without performing an operation of returning the fork shaft FS2 to its neutral position (an operation of cancelling the second gear stage).

As shown in FIG. 6(c), the shift operation is performed in a state in which the inner lever IL butts against the 3rd head. As a result, the inner lever IL presses the 3rd head, so that the fork shaft FS3 moves from its neutral position to the meshing position for the third gear stage. At that time, as described above, in the state shown in FIG. 6(b) (namely, the state in which the second gear stage has been realized), the pin P3 butts against the end g2a (see FIG. 4). Namely, the fork shafts FS2 and FS3 are coupled with each other in the axial direction. Accordingly, simultaneously with the above-described movement of the fork shaft FS3 from its neutral position to the meshing position for the third gear stage, the fork shaft FS2 moves in the same direction as the fork shaft FS3 from the meshing position for the second gear stage to its neutral position. As described above, the "operation of cancelling the second gear stage" and the "operation of realizing the third gear stage" can be performed simultaneously.

FIG. 7 shows an operation for the sequential downshift from the second gear stage to the first gear stage. As in the above-described case of FIG. 6, as shown in FIG. 7(b), the inner lever IL can move in the space between the 4th head and the 5th head upon the selection operation. As a result, as indicated by a thin arrow in FIG. 7(b), by combining the shift operation and the selection operation, it is possible to move the inner lever IL from a "position for butting against the 2nd head" to a "position for butting against the 1 st head" while maintaining the fork shaft FS2 in the meshing position for the second gear stage (namely, without performing an operation of returning the fork shaft FS2 to its neutral position (an operation of cancelling the second gear stage).

As shown in FIG. 7(c), the shift operation is performed in a state in which the inner lever IL butts against the 1st head. As a result, the inner lever IL presses the 1 st head, so that the fork shaft FS1 moves from its neutral position to the meshing position for the first gear stage. At that time, as described above, in the state shown in FIG. 7(b) (namely, the state in which the second gear stage has been realized), the pin P2 butts against the end g1b (see FIG. 4). Namely, the fork shafts FS1 and FS2 are coupled with each other in the axial direction. Accordingly, simultaneously with the above-described movement of the fork shaft FS1 from its neutral position to the meshing position for the first gear stage, the fork shaft FS2 moves in the same direction as the fork shaft FS1 from the meshing position for the second gear stage to its neutral position. As described above, the "operation of cancelling the second gear stage" and the "operation of realizing the first gear stage" can be performed simultaneously.

In the present apparatus, as for all of sequential upshifts and sequential downshifts, in addition to the sequential upshift from the second gear stage to the third gear stage and the sequential downshift from the second gear stage to the first gear stage, the "operation of cancelling the current gear stage" and the "operation of realizing an adjacent gear stage" can be performed simultaneously.

Specifically, as can be understood from FIG. 4, in the sequential upshift from the first gear stage to the second gear stage, the "operation of cancelling the first gear stage" and the "operation of realizing the second gear stage" can be performed simultaneously through utilization of the coupling of the fork shafts FS1 and FS2 realized as a result of butting between the pin P2 and the end g1b. In the sequential downshift from the third gear stage to the second gear stage, the "operation of cancelling the third gear stage" and the "operation of realizing the second gear stage" can be performed simultaneously through utilization of the coupling of the fork shafts FS2 and FS3 realized as a result of butting between the pin P3 and the end g2a.

In the sequential upshift and the sequential downshift between the third gear stage and the fourth gear stage, the "operation of cancelling the third gear stage" and the "operation of realizing the fourth gear stage" can be performed simultaneously and the "operation of cancelling the fourth gear stage" and the "operation of realizing the third gear stage" can be performed simultaneously through utilization of the coupling of the fork shafts FS2 and FS3 realized as a result of butting between the pin P1 and the end g3b.

In the sequential upshift and the sequential downshift between the fourth gear stage and the fifth gear stage, the "operation of cancelling the fourth gear stage" and the "operation of realizing the fifth gear stage" can be performed simultaneously and the "operation of cancelling the fifth gear stage" and the "operation of realizing the fourth gear stage" can be performed simultaneously through utilization of the coupling of the fork shafts FS1 and FS2 realized as a result of butting between the pin P2 and the end g1 a.

In the sequential upshift and the sequential downshift between the fifth gear stage and the sixth gear stage, the "operation of cancelling the fifth gear stage" and the "operation of realizing the sixth gear stage" can be performed simultaneously and the "operation of cancelling the sixth gear stage" and the "operation of realizing the fifth gear stage" can be performed simultaneously through utilization of the coupling of the fork shafts FS2 and FS3 realized as a result of butting between the pin P3 and the end g2b.

As described above, in the present apparatus, for all of the shift patterns; i.e., the sequential upshifts and sequential downshifts between gear stages among the first gear stage through the sixth gear stage, the "operation of cancelling the current gear stage" and the "operation of realizing an adjacent gear stage" can be performed simultaneously. Accordingly, the neutral period becomes shorter as compared with the conventional apparatus in which the "operation of realizing an adjacent gear stage" is performed after the "operation of cancelling the current gear stage."

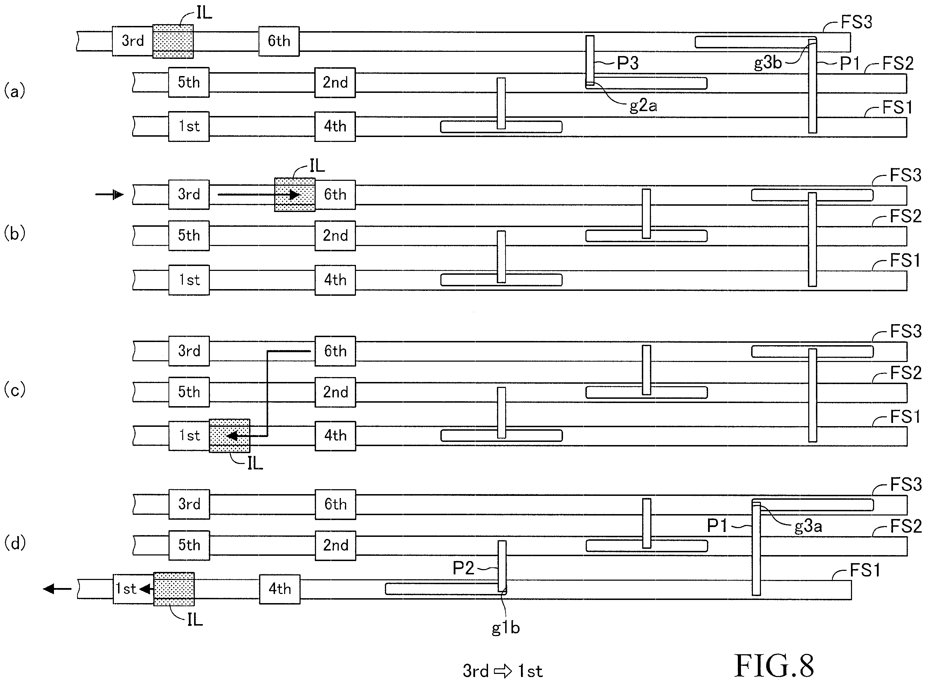

In addition, in the present apparatus, skip shift (gear shift from the current gear stage to a nonadjacent gear stage) can be performed. Specifically, for example, FIG. 8 shows an operation for a skip shift from the third gear stage to the first gear stage. As shown in FIG. 8(a), in a state in which the third gear stage has been realized, the inner lever IL butts against the 3rd head. In this state, the shift operation is firstly performed as shown in FIG. 8(b). As a result, the inner lever IL presses the 6th head, whereby the fork shaft FS3 moves to its neutral position from the meshing position for the third gear stage. Namely, the neutral state is obtained.

Next, as indicated by a thin arrow in FIG. 8(c), while the neutral state is maintained, by combining the shift operation and the selection operation, the inner lever IL is moved from the "position for butting against the 6th head" to the "position for butting against the 1 st head."

Subsequently, as a result of performance of the shift operation in the state in which the inner lever IL butts against the 1 st head as shown in FIG. 8(d), the inner lever IL presses the 1 st head, whereby the fork shaft FS1 moves from its neutral position to the meshing position for the first gear stage. As a result the skip shift from the third gear stage to the first gear stage is completed.

As described above, in the present apparatus, after the fork shaft corresponding to the currently realized gear stage has moved to its neutral position from the meshing position corresponding to that gear stage, any fork shaft can be moved from its neutral position to a meshing position. Namely, by performing the "operation of realizing the gear stage after the shift operation" after the "operation of cancelling the gear stage before the shift operation" as in the case of the conventional apparatus, the "skip shift" can be performed as in the case of the conventional apparatus. In summary, the present apparatus can shorten the neutral period in the sequential shift and can perform the skip shift.

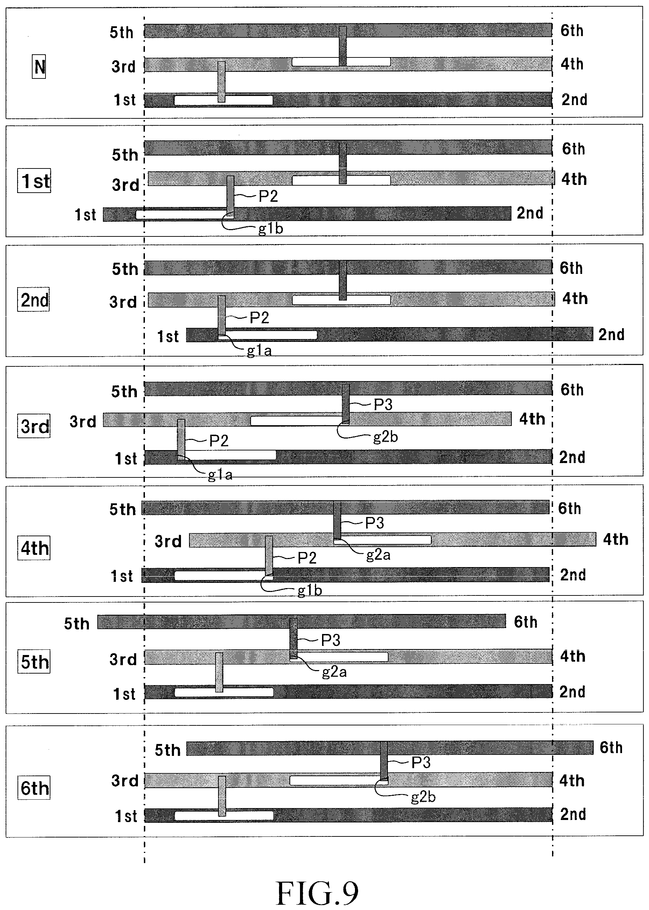

FIG. 9 shows movement patterns of the fork shafts FS1, FS2, and FS3 of a transmission which is a modification of the above-described apparatus and has six gear stages. In the example shown in FIG. 9, the fork shaft FS1 coupled with the "sleeve S1 engageable with the free-rotating gears G1o and G2o" has a 1 st head and a 2nd head. The fork shaft FS2 coupled with the "sleeve S2 engageable with the free-rotating gears G3o and G4o" has a 3rd head and a 4th head. The fork shaft FS3 coupled with the "sleeve S3 engageable with the free-rotating gears G5o and G6o" has a 5th head and a 6th head.

In the above-described apparatus, as for all of the shift patterns; i.e., the sequential upshifts and sequential downshifts between gear stages among the first gear stage through the sixth gear stage, the "operation of cancelling the current gear stage" and the "operation of realizing an adjacent gear stage" can be performed simultaneously. In contrast, in the example shown in FIG. 9, only as for some of the shift patterns (the sequential upshifts and sequential downshifts between gear stages among the first gear stage through the sixth gear stage), the "operation of cancelling the current gear stage" and the "operation of realizing an adjacent gear stage" can be performed simultaneously, and as for the remaining shift patterns, the "operation of realizing an adjacent gear stage" can be performed after the "operation of cancelling the current gear stage" like the conventional apparatus.

Specifically, as for the sequential upshift and the sequential downshift between the first gear stage and the second gear stage, the sequential upshift and the sequential downshift between the third gear stage and the fourth gear stage, and the sequential upshift and the sequential downshift between the fifth gear stage and the sixth gear stage, the "operation of realizing an adjacent gear stage" is performed after the "operation of cancelling the current gear stage" as in the case of the conventional apparatus.

In the sequential upshift and the sequential downshift between the second gear stage and the third gear stage, the "operation of cancelling the second gear stage" and the "operation of realizing the third gear stage" can be performed simultaneously and the "operation of cancelling the third gear stage" and the "operation of realizing the second gear stage" can be performed simultaneously through utilization of the coupling of the fork shafts FS1 and FS2 realized as a result of butting between the pin P2 and the end g1 a.

In the sequential upshift and the sequential downshift between the fourth gear stage and the fifth gear stage, the "operation of cancelling the fourth gear stage" and the "operation of realizing the fifth gear stage" can be performed simultaneously and the "operation of cancelling the fifth gear stage" and the "operation of realizing the fourth gear stage" can be performed simultaneously through utilization of the coupling of the fork shafts FS2 and FS3 realized as a result of butting between the pin P3 and the end g2a.

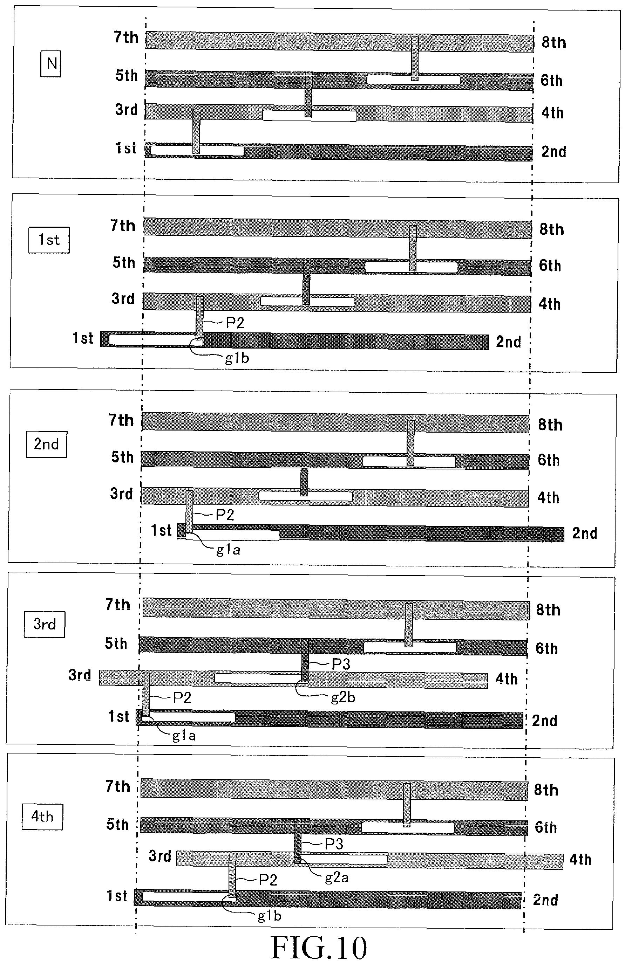

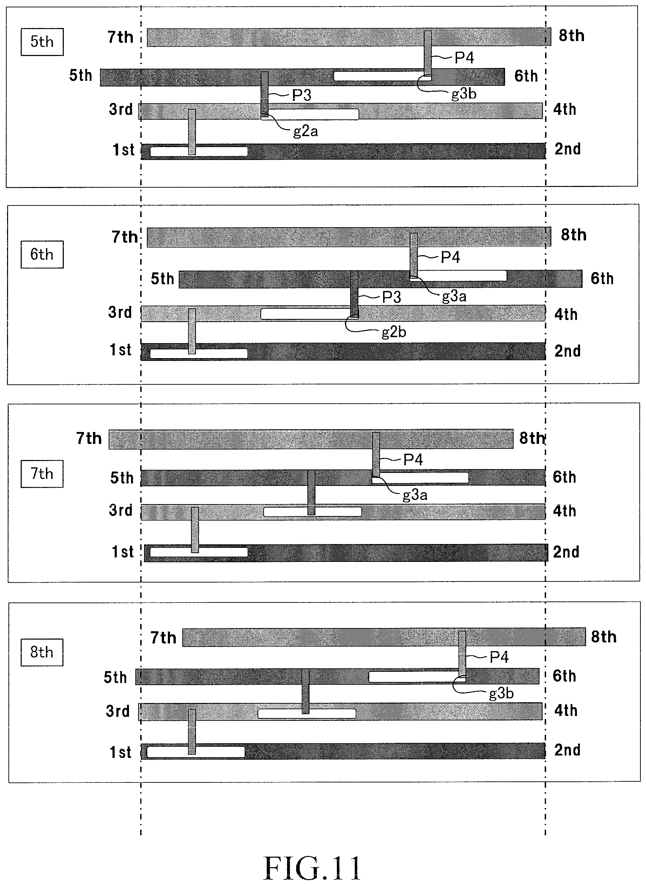

FIGS. 10 and 11 show movement patterns of the fork shafts FS1, FS2, FS3, and FS4 of a transmission having eight gear stages which is obtained by adding fixed gears G7i and G8i, free-rotating gears G7o and G8o, a sleeve S4, and the fork shaft FS4 to the modification shown in FIG. 9. In the example shown in FIGS. 10 and 11, the fork shafts FS1, FS2, and FS3 are the same as those in the example shown in FIG. 9. The fork shaft FS4 coupled with the "sleeve S4 engageable with the free-rotating gears G7o and G8o" has a 7th head and an 8th head.

In FIGS. 10 and 11, the sequential upshifts and the sequential downshifts between the first gear stage and the second gear stage, between the second gear stage and the third gear stage, between the third gear stage and the fourth gear stage, between the fourth gear stage and the fifth gear stage, and between the fifth gear stage and the sixth gear stage are performed in the same manner as in the example shown in FIG. 9. In the sequential upshift and the sequential downshift between the sixth gear stage and the seventh gear stage, the "operation of cancelling the sixth gear stage" and the "operation of realizing the seventh gear stage" can be performed simultaneously and the "operation of cancelling the seventh gear stage" and the "operation of realizing the sixth gear stage" can be performed simultaneously through utilization of the coupling of the fork shafts FS3 and FS4 realized as a result of butting between the pin P4 and the end g3a. As for the sequential upshift and the sequential downshift between the seventh gear stage and the eighth gear stage, the "operation of realizing an adjacent gear stage" is performed after the "operation of cancelling the current gear stage" as in the case of the conventional apparatus.

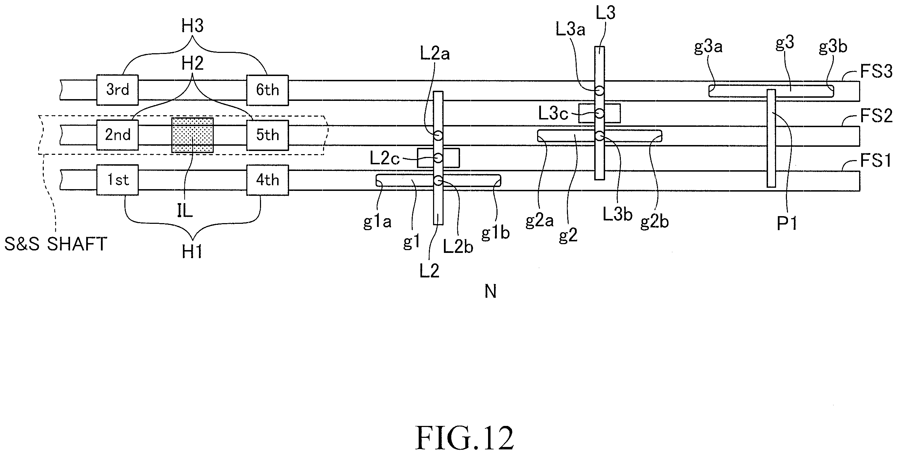

FIG. 12 shows movement patterns of the fork shafts FS1, FS2, and FS3 of a transmission which is a modification of the above-described apparatus and has six gear stages. In the above-described apparatus, three combinations of "pins and grooves" each constitute the above-mentioned "coupling mechanism." In contrast, in the example shown in FIG. 12, not only the combination of "a pin and a groove" but also combinations of "links and grooves" each constitute the above-mentioned "coupling mechanism."

Specifically, in the example shown in FIG. 12, instead of the pins P2 and P3 (see FIG. 2), links L2 and L3 are employed. The link L2 has a rod-like shape, and its fulcrum L2c located in a longitudinal central portion thereof is connected to the housing (not shown) in a position between the fork shafts FS1 and FS2 such that the link L2 is unmovable and rotatable in relation to the housing. Accordingly, the link L2 can rotate about the fulcrum L2c in relation to the housing.

A first portion L2a of the link L2 separated from the fulcrum L2c is connected to an engagement portion of the fork shaft FS2 such that the first portion L2a is unmovable and rotatable in relation to the engagement portion. A second portion L2b of the link L2 separated from the fulcrum L2c in a direction opposite the first portion L2a is fitted into the groove g1. Notably, in actuality, the distances of the first and second portions L2a and L2b from the fulcrum L2c change with the angle of the link L2 in relation to the housing.

When both the fork shafts FS1 and FS2 are located in their neutral positions, the longitudinal direction of the link L2 is a direction perpendicular to the axial direction of the fork shafts FS1 and FS2 (hereinafter simply referred to as the "perpendicular direction"), and the portion L2b is located in the center of the groove g1 in the axial direction (see FIG. 12). When one of the fork shafts FS1 and FS2 is located in its neutral position and the other of the fork shafts FS1 and FS2 is located in the meshing position for a certain gear stage, the longitudinal direction of the link L2 inclines from the "perpendicular direction," and the portion L2b butts against either one of the ends g1a and g1b. In other words, the fork shafts FS1 and FS2 are coupled with each other in the axial direction.

The link L3 has the same shape as the link L2, and its fulcrum L3c located in a longitudinal central portion thereof is connected to the housing (not shown) in a position between the fork shafts FS2 and FS3 such that the link L3 is unmovable and rotatable in relation to the housing. Accordingly, the link L3 can rotate about the fulcrum L3c in relation to the housing.

A first portion L3a of the link L3 separated from the fulcrum L3c is connected to an engagement portion of the fork shaft FS3 such that the first portion L3a is unmovable and rotatable in relation to the engagement portion. A second portion L3b of the link L3 separated from the fulcrum L3c in a direction opposite the first portion L3a is fitted into the groove g2. Notably, in actuality, the distances of the first and second portions L3a and L3b from the fulcrum L3c change with the angle of the link L3 in relation to the housing. Each of the combination of "the pin P1 and the groove g3", the combination of "the link L2 and the groove g1," and the combination of "the link L3 and the groove g2," constitutes the above-mentioned "coupling mechanism."

When both the fork shafts FS2 and FS3 are located in their neutral positions, the longitudinal direction of the link L3 coincides with the "perpendicular direction", and the portion L3b is located in the center of the groove g2 in the axial direction (see FIG. 12). When one of the fork shafts FS2 and FS3 is located in its neutral position and the other of the fork shafts FS2 and FS3 is located in the meshing position for a certain gear stage, the longitudinal direction of the link L3 inclines from the "perpendicular direction," and the portion L3b butts against either one of the ends g2a and g2b. In other words, the fork shafts FS2 and FS3 are coupled with each other in the axial direction.

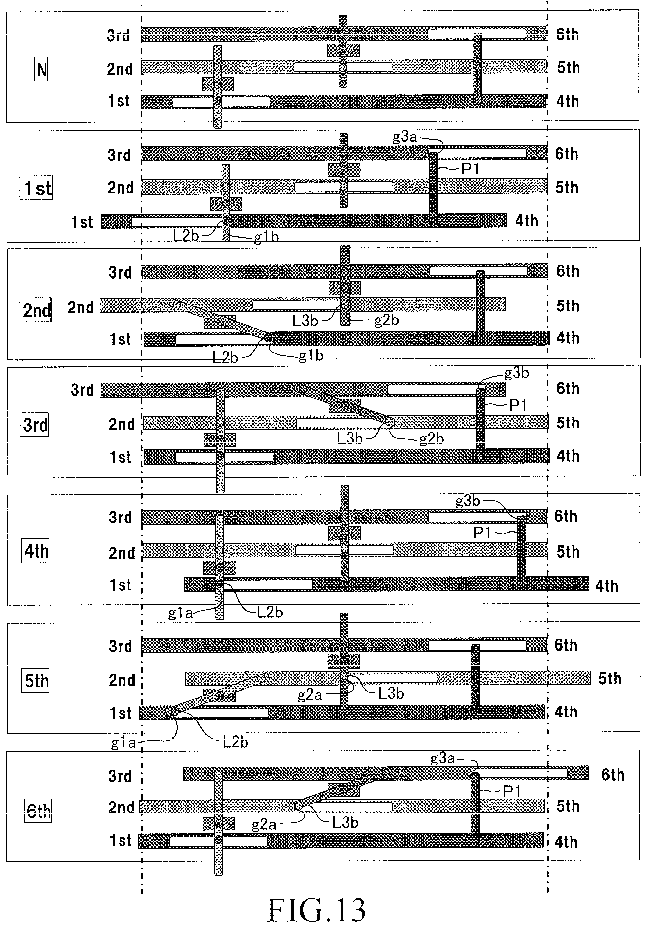

Specifically, as shown in FIG. 13, in a state in which the first gear stage has been realized, the pin P1 butts against the end g3a, and the portion L2b butts against the end g1b. In a state in which the second gear stage has been realized, the portion L2b butts against the end g1 b, and the portion L3b butts against the end g2b. In a state in which the second gear stage has been realized, the portion L2b butts against the end g1 b, and the portion L3b butts against the end g2b. In a state in which the third gear stage has been realized, the portion L3b butts against the end g2b, and the pin P1 butts against the end g3b. In a state in which the fourth gear stage has been realized, the pin P1 butts against the end g3b, and the portion L2b butts against the end g1a. In a state in which the fifth gear stage has been realized, the portion L2b butts against the end g1 a, and the portion L3b butts against the end g2a. In a state in which the sixth gear stage has been realized, the portion L3b butts against the end g2a, and the pin P1 butts against the end g3a.

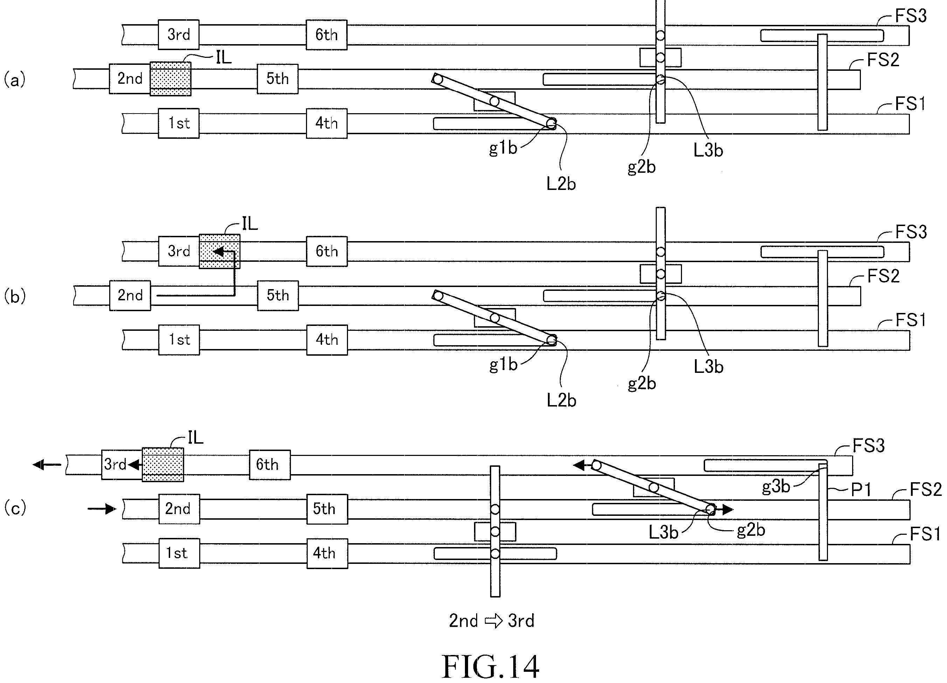

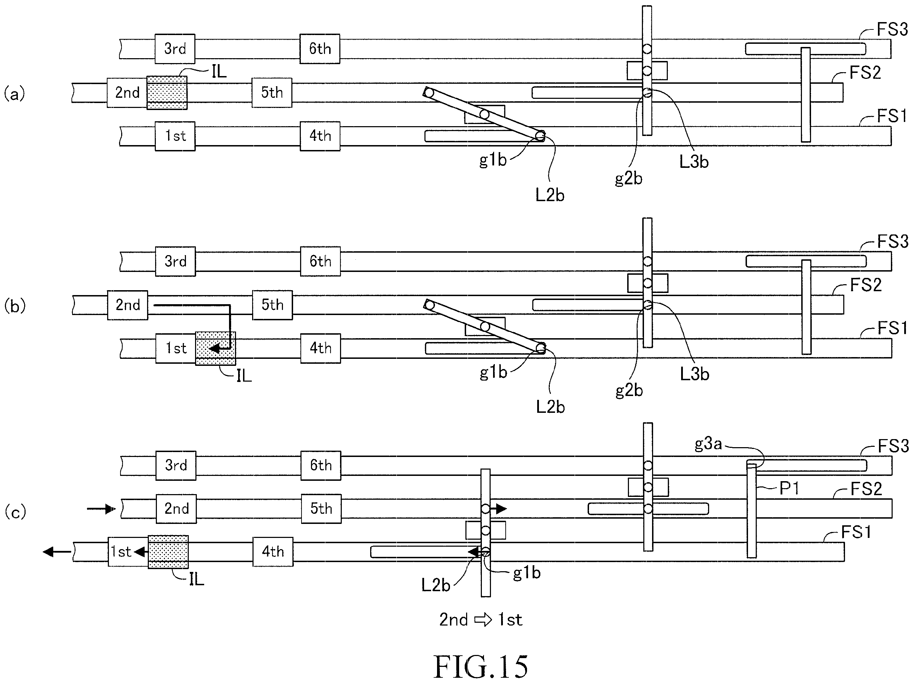

In the example shown in FIG. 12 as well, the above-described relation of "(A-C) > B" holds. Since this relation holds, as for the sequential shift, the "operation of cancelling the current gear stage" and the "operation of realizing the adjacent gear stage" can be performed simultaneously in this example as well, as in the case of the above-described present apparatus. This point will now be described with reference to FIGS. 14 and 15.

FIG. 14 shows an operation for the sequential upshift from the second gear stage to the third gear stage. As shown in FIG. 14(a), in a state in which the second gear stage has been realized, the inner lever IL butts against the 2nd head. In this state, since the relation of "(A-C) > B" holds as described above, the inner lever IL can move in the space between the 3rd head and the 5th head upon the selection operation. As a result, as indicated by a thin arrow in FIG. 14(b), by combining the shift operation and the selection operation, it is possible to move the inner lever IL from a "position for butting against the 2nd head" to a "position for butting against the 3rd head" while maintaining the fork shaft FS2 in the meshing position for the second gear stage (namely, without performing an operation of returning the fork shaft FS2 to its neutral position (an operation of cancelling the second gear stage)).

As shown in FIG. 14(c), the shift operation is performed in a state in which the inner lever IL butts against the 3rd head. As a result, the inner lever IL presses the 3rd head, so that the fork shaft FS3 moves from its neutral position to the meshing position for the third gear stage. At that time, as described above, in the state shown in FIG. 14(b) (namely, the state in which the second gear stage has been realized), the portion L3b butts against the end g2b (see FIG. 13). Namely, the fork shafts FS2 and FS3 are coupled with each other in the axial direction. Accordingly, simultaneously with the above-described movement of the fork shaft FS3 from its neutral position to the meshing position for the third gear stage, the fork shaft FS2 moves, in the direction opposite the moving direction of the fork shaft FS3, from the meshing position for the second gear stage to its neutral position. As described above, the "operation of cancelling the second gear stage" and the "operation of realizing the third gear stage" can be performed simultaneously.

FIG. 15 shows an operation for the sequential downshift from the second gear stage to the first gear stage. As in the above-described case of FIG. 14, as shown in FIG. 15(b), the inner lever IL can move in the space between the 1 st head and the 5th head upon the selection operation. As a result, as indicated by a thin arrow in FIG. 15(b), by combining the shift operation and the selection operation, it is possible to move the inner lever IL from a "position for butting against the 2nd head" to a "position for butting against the 1 st head" while maintaining the fork shaft FS2 in the meshing position for the second gear stage (namely, without performing an operation of returning the fork shaft FS2 to its neutral position (an operation of cancelling the second gear stage)).

As shown in FIG. 15(c), the shift operation is performed in a state in which the inner lever IL butts against the 1st head. As a result, the inner lever IL presses the 1 st head, so that the fork shaft FS1 moves from its neutral position to the meshing position for the first gear stage. At that time, as described above, in the state shown in FIG. 15(b) (namely, the state in which the second gear stage has been realized), the portion L2b butts against the end g1b (see FIG. 13). Namely, the fork shafts FS1 and FS2 are coupled with each other in the axial direction. Accordingly, simultaneously with the above-described movement of the fork shaft FS1 from its neutral position to the meshing position for the first gear stage, the fork shaft FS2 moves, in the direction opposite the moving direction of the fork shaft FS1, from the meshing position for the second gear stage to its neutral position. As described above, the "operation of cancelling the second gear stage" and the "operation of realizing the first gear stage" can be performed simultaneously.

In the example shown in FIG. 12, as in the case of the above-described present apparatus, for all of sequential upshifts and sequential downshifts, in addition to the sequential upshift from the second gear stage to the third gear stage and the sequential downshift from the second gear stage to the first gear stage, the "operation of cancelling the current gear stage" and the "operation of realizing an adjacent gear stage" can be performed simultaneously.

Specifically, as is clear from FIG. 13, in the sequential upshift from the first gear stage to the second gear stage, the "operation of cancelling the first gear stage" and the "operation of realizing the second gear stage" can be performed simultaneously through utilization of the coupling of the fork shafts FS1 and FS2 realized as a result of butting between the portion L2b and the end g1 b. In the sequential downshift from the third gear stage to the second gear stage, the "operation of cancelling the third gear stage" and the "operation of realizing the second gear stage" can be performed simultaneously through utilization of the coupling of the fork shafts FS2 and FS3 realized as a result of butting between the portion L3b and the end g2b.

In the sequential upshift and the sequential downshift between the third gear stage and the fourth gear stage, the "operation of cancelling the third gear stage" and the "operation of realizing the fourth gear stage" can be performed simultaneously and the "operation of cancelling the fourth gear stage" and the "operation of realizing the third gear stage" can be performed simultaneously through utilization of the coupling of the fork shafts FS1 and FS3 realized as a result of butting between the pin P1 and the end g3b.

In the sequential upshift and the sequential downshift between the fourth gear stage and the fifth gear stage, the "operation of cancelling the fourth gear stage" and the "operation of realizing the fifth gear stage" can be performed simultaneously and the "operation of cancelling the fifth gear stage" and the "operation of realizing the fourth gear stage" can be performed simultaneously through utilization of the coupling of the fork shafts FS1 and FS2 realized as a result of butting between the portion L2b and the end g1 a.

In the sequential upshift and the sequential downshift between the fifth gear stage and the sixth gear stage, the "operation of cancelling the fifth gear stage" and the "operation of realizing the sixth gear stage" can be performed simultaneously and the "operation of cancelling the sixth gear stage" and the "operation of realizing the fifth gear stage" can be performed simultaneously through utilization of the coupling of the fork shafts FS2 and FS3 realized as a result of butting between the portion L3b and the end g2a.

As described above, in the example shown in FIG. 12 as well, as in the case of the above-described present apparatus, as for all of the shift patterns; i.e., the sequential upshifts and sequential downshifts between gear stages among the first gear stage through the sixth gear stage, the "operation of cancelling the current gear stage" and the "operation of realizing an adjacent gear stage" can be performed simultaneously. Accordingly, the neutral period becomes shorter as compared with the conventional apparatus in which the "operation of realizing an adjacent gear stage" is performed after the "operation of cancelling the current gear stage."

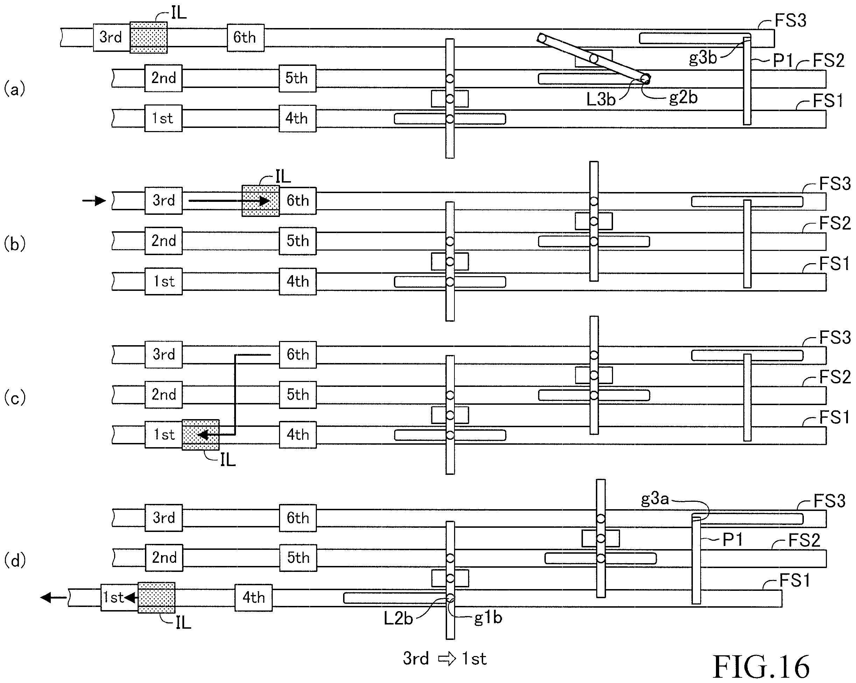

In addition, in the example shown in FIG. 12, as in the case of the above-described present apparatus, skip shift can also be performed. Specifically, for example, FIG. 16 shows an operation for a skip shift from the third gear stage to the first gear stage. As shown in FIG. 16(a), in a state in which the third gear stage has been realized, the inner lever IL butts against the 3rd head. In this state, the shift operation is firstly performed as shown in FIG. 16(b). As a result, the inner lever IL presses the 6th head, whereby the fork shaft FS3 moves to its neutral position from the meshing position for the third gear stage. Namely, the neutral state is obtained.

Next, as indicated by a thin arrow in FIG. 16(c), while the neutral state is maintained, by combining the shift operation and the selection operation, the inner lever IL is moved from the "position for butting against the 6th head" to the "position for butting against the 1 st head."

Subsequently, as a result of performance of the shift operation in the state in which the inner lever IL butts against the 1 st head as shown in FIG. 16(d), the inner lever IL presses the 1 st head, whereby the fork shaft FS1 moves from its neutral position to the meshing position for the first gear stage. As a result the skip shift from the third gear stage to the first gear stage is completed.

In summary, in the example shown in FIG. 12, as in the case of the above-described present apparatus, the neutral period in the sequential shift is short, and the skip shift can be performed.

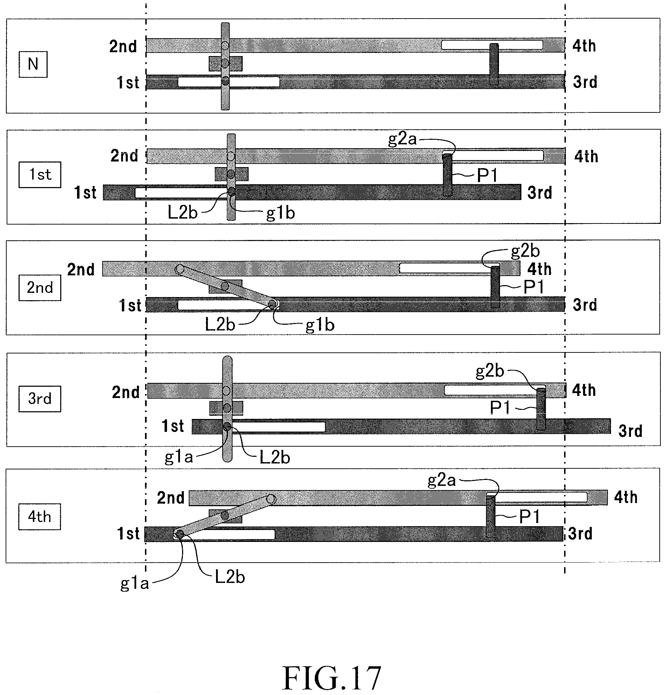

FIG. 17 shows movement patterns of the fork shafts FS1 and FS2 of a transmission having four gear stages which is obtained by removing the fixed gears G5i and G6i, the free-rotating gears G5o and G6o, the sleeve S3, and the fork shaft FS3 from the modification shown in FIG. 12.

In the example shown in FIG. 17, in the sequential upshift and the sequential downshift between the first gear stage and the second gear stage, the "operation of cancelling the first gear stage" and the "operation of realizing the second gear stage" can be performed simultaneously and the "operation of cancelling the second gear stage" and the "operation of realizing the first gear stage" can be performed simultaneously through utilization of the coupling of the fork shafts FS1 and FS2 realized as a result of butting between the portion L2b and the end g1b.

In the sequential upshift and the sequential downshift between the second gear stage and the third gear stage, the "operation of cancelling the second gear stage" and the "operation of realizing the third gear stage" can be performed simultaneously and the "operation of cancelling the third gear stage" and the "operation of realizing the second gear stage" can be performed simultaneously through utilization of the coupling of the fork shafts FS1 and FS2 realized as a result of butting between the pin P1 and the end g2b.

In the sequential upshift and the sequential downshift between the third gear stage and the fourth gear stage, the "operation of cancelling the third gear stage" and the "operation of realizing the fourth gear stage" can be performed simultaneously and the "operation of cancelling the fourth gear stage" and the "operation of realizing the third third stage" can be performed simultaneously through utilization of the coupling of the fork shafts FS1 and FS2 realized as a result of butting between the portion L2b and the end g1 a.

As described above, in the example shown in FIG. 17 as well, for all of the shift patterns; i.e., the sequential upshifts and sequential downshifts between gear stages among the first gear stage through the fourth gear stage, the "operation of cancelling the current gear stage" and the "operation of realizing an adjacent gear stage" can be performed simultaneously.

The present invention is not limited to the above-described embodiment, and various modifications may be employed without departing from the scope of the present invention. For example, in the above-descried embodiment, etc., a combination of "a pin and a groove" or a combination of "a link and a groove" is used as the above-mentioned "coupling mechanism." However, a combination of "a pin and a protrusion" or a combination of "a link and a protrusion" may be used. In this case as well, the same action and effects are attained.

The combination of "a pin and a protrusion" refers to a structure in which in place of a "groove," protrusions are provided on a fork shaft at positions corresponding to the opposite ends of the groove in the axial direction, and a distal end portion of the pin is disposed between the two protrusions. The combination of "a link and a protrusion" refers to a structure in which in place of a "groove," protrusions are provided on a fork shaft at positions corresponding to the opposite ends of the groove in the axial direction, and the above-mentioned second portion of the link is disposed between the two protrusions. In the case where "protrusions" are provided in place of the groove, the coupling between two fork shafts is not realized by butting between the "pin (link)" and the "ends of the groove in the axial direction" but is realized by butting between the "pin (link)" and the "protrusions."

In the above-described embodiment, etc., the S&S shaft is disposed so as to be parallel to the fork shafts, the movement of the S&S shaft in the axial direction corresponds to the shift operation, and the rotation of the S&S shaft about its axis corresponds to the selection operation. However, the S&S shaft may be disposed perpendicular to the fork shafts. In this case, the movement of the S&S shaft in the axial direction corresponds to the selection operation, and the rotation of the S&S shaft about its axis corresponds to the selection operation.

In the above-described embodiment, etc., the plurality of fork shafts are driven in the axial direction through use of the S&S shaft. However, the plurality of fork shafts may be driven in the axial direction through use of any other drive device without use of the S&S shaft.

In the above-described embodiment, etc., when "skip shift" is performed, it is necessary to perform the "operation of realizing the gear stage after the shift operation" after the "operation of cancelling the gear stage before the shift operation" as in the case of the conventional apparatus. However, in above-described embodiment, etc., the combination of two gear stages for which the "operation of cancelling the gear stage before the shift operation" and the "operation of realizing the gear stage after the shift operation" can be performed simultaneously may be changed from the "combinations of gear stages for sequential shift" to the "combinations of gear stages for skip shift." In this case, even when "skip shift" is performed, the "operation of cancelling the gear stage before the shift operation" and the "operation of realizing the gear stage after the shift operation" can be performed simultaneously.

In the above-described embodiment, etc., all the sleeves S1, S2, and S3 are provided on the output shaft A3. However, each of the sleeves S1, S2, and S3 may be provided on either one of the input shaft A2 and the output shaft A3. Each of the sleeves S1, S2, and S3 is provided on a shaft which is selected from the input shaft A2 and the output shaft A3 and on which corresponding free-rotating gears are provided.

## Claims

1. A power transmission control apparatus for a vehicle comprising:
a transmission which includes an input shaft for receiving power from a drive output shaft of a power source of a vehicle and an output shaft for outputting power to a drive wheel of said vehicle and which has a plurality of gear stages;
an actuator for controlling said transmission so as to selectively realize one gear stage of a plurality of said gear stages; and
control means for controlling said actuator based on a travel state of said vehicle,
wherein said transmission includes:
a plurality of fixed gears each of which is unrotatably provided on said input shaft or said output shaft and which correspond to a plurality of said gear stages;
a plurality of free-rotating gears each of which is rotatably provided on said input shaft or said output shaft, which correspond to a plurality of said gear stages, and each of which is always in meshing engagement of said fixed gear for a corresponding gear stage;
a plurality of sleeves each of which is provided on a corresponding shaft of said input shaft and said output shaft to be unrotatable and movable in an axial direction in relation to said corresponding shaft and each of which is engageable with a corresponding free-rotating gear of said plurality of free-rotating gears;
a plurality of fork shafts which are provided to be movable in said axial direction and each of which is coupled with a corresponding sleeve of a plurality of said sleeves to be unmovable in said axial direction in relation to said corresponding sleeve, each fork shaft being positioned in a neutral position in said axial direction so as to establish a state in which said corresponding sleeve is not in engagement with said corresponding free-rotating gears and being positioned in a meshing position on a first side and/or a second side of said neutral position in said axial direction so as to establish a state in which said corresponding sleeve comes into engagement with said corresponding free-rotating gears so that said corresponding free-rotating gear is unrotatably fixed to said corresponding shaft; and
a coupling mechanism which is configured to be able to couple first and second fork shafts of a plurality of said fork shafts in said axial direction,
each fork shaft being movable between its neutral position and said corresponding meshing position(s) while maintaining all said remaining fork shafts in their neutral positions,
said actuator being configured to drive each of said fork shafts in said axial direction,
said coupling mechanism being configured such that
said coupling mechanism does not couple said first and second fork shafts in said axial direction when both said first and second fork shafts are located in their neutral positions, so that, while one of said first and second fork shafts is maintained in its neutral position, the other of said first and second fork shafts can be moved, through drive of said actuator, from its neutral position to said corresponding meshing position, and
when said one fork shaft is located in its neutral position and the other fork shaft is located in said corresponding meshing position, said coupling mechanism couples said first and second fork shafts in said axial direction, so that, when said one fork shaft is moved from its neutral position to said corresponding meshing position through drive of said actuator, the other fork shaft is simultaneously moved from said corresponding meshing position to its neutral position.

2. A power transmission control apparatus for a vehicle according to claim 1, wherein said coupling mechanism is configured such that
when said one fork shaft is located in its neutral position and the other fork shaft is located in said corresponding meshing position on said first side, said coupling mechanism couples said first and second fork shafts in said axial direction so that, when said one fork shaft is moved from its neutral position to said corresponding meshing position on said second side through drive of said actuator, the other fork shaft is simultaneously moved from said corresponding meshing position on said first side to its neutral position.

3. A power transmission control apparatus for a vehicle according to claim 2, wherein
said coupling mechanism includes a coupling member which can couple said first and second fork shafts in said axial direction and is configured such that
a first portion of said coupling member is coupled with an engagement portion of said first fork shaft to be unmovable and unrotatable in relation to said engagement portion,
when both said first and second fork shafts are located in their neutral positions, a second portion of said coupling member separated from said first portion does not butt against an engagement portion of said second fork shaft, and
when one of said first and second fork shafts is located in its neutral position and the other of said first and second fork shafts is located in said corresponding meshing position, said second portion of said coupling member butts against said engagement portion of said second fork shaft so that said first and second fork shafts are coupled with each other in said axial direction.

4. A power transmission control apparatus for a vehicle according to claim 1, wherein said coupling mechanism is configured such that
when said one fork shaft is located in its neutral position and the other fork shaft is located in said corresponding meshing position on said first side, said coupling mechanism couples said first and second fork shafts with each other in said axial direction so that, when said one fork shaft is moved from its neutral position to said corresponding meshing position on said first side through drive of said actuator, the other fork shaft is simultaneously moved from said corresponding meshing position on said first side to its neutral position.

5. A power transmission control apparatus for a vehicle according to claim 4, wherein
said coupling mechanism includes a coupling member which can couple said first and second fork shafts with each other in said axial direction,
said coupling member is rotatable about a fulcrum of said coupling member located between said first and second fork shafts, and
said coupling member is configured such that
a first portion of said coupling member separated from said fulcrum is coupled with an engagement portion of said first fork shaft to be unmovable and unrotatable in relation to said engagement portion,
when both said first and second fork shafts are located in their neutral positions, a second portion of said coupling member separated from said fulcrum in a direction opposite said first portion does not butt against an engagement portion of said second fork shaft, and
when one of said first and second fork shafts is located in its neutral position and the other of said first and second fork shafts is located in said corresponding meshing position, said second portion of said coupling member butts against said engagement portion of said second fork shaft so that said first and second fork shafts are coupled with each other in said axial direction.

6. A power transmission control apparatus for a vehicle according to any one of claims 1 to 5, wherein
each of said fork shafts has two heads which are separated from each other in said axial direction and which correspond to two of a plurality of said gear stages, and
said transmission includes a shift and selection shaft which is provided to be movable in said axial direction and rotatable about its axis and which has an inner lever protruding from a circumferential surface of said shift and selection shaft,
wherein, when said shift and selection shaft is moved in said axial direction or is rotated about said axis, one fork shaft of a plurality of said fork shafts is selected and said inner lever enters a space between said two heads of said selected fork shaft, and when said shift and selection shaft is rotated about said axis or moved in said axial direction, said inner lever presses either one of said two heads of said selected fork shaft in said axial direction so that said selected fork shaft moves in said axial direction from its neutral position to said meshing position corresponding to said pressed head, whereby said gear stage corresponding to said pressed head is realized,
said actuator is configured to drive said shift and selection shaft in said axial direction and drive said shift and selection shaft for rotation about said axis, and
a distance obtained by subtracting, from a distance between said two heads provided on each fork shaft, a moving distance of said fork shaft from said neutral position to said meshing position, is greater than a width of said inner lever as measured in said axial direction of said fork shaft.
